# EUROPEAN PATENT SPECIFICATION

(11) **EP 2 337 709 B1**
(45) Date of publication and mention of the grant of the patent: **23.01.2013**
(21) Application number: 09815665.6
(22) Date of filing: 14.09.2009
(51) Int. Cl.: B60R 21/01

(54) **UPHOLSTERY ITEM COMPRISING OCCUPANCY SENSOR MAT**
POLSTERELEMENT MIT INSASSENSENSORMATTE
ARTICLE DE GARNITURE AVEC TAPIS DÉTECTEUR DE PRÉSENCE

(30) Priority: 29.09.2008 EP 08165382
(43) Date of publication of application: 29.06.2011
(73) Proprietor: IEE International Electronics & Engineering S.A., 6468 Echternach (LU)
(72) Inventor: CHAUDRON, Julien, F-57570 Cattenom (FR); WANG, Tony, L-9640 Boulaide (LU); REDLAFF, Darius, L-4974 Dippach (LU)
(74) Representative: Office Freylinger
(86) International application number: PCT/EP2009/061864
(87) International publication number: WO 2010/034636

(56) References cited:
- WO-A-2007/028819
- US-A1- 2006 192 417
- US-B1- 6 659 549

## Description

### Technical field

The present invention generally relates to an upholstery item, such as e.g. a mattress, a chair, a vehicle seat, etc., comprising a film-type occupancy sensor mat for detecting an occupancy state of the upholstery item.

### Background Art

Upholstery items equipped with occupancy sensor mats are well known, for instance, in the automotive field, where there is a need for knowing the occupancy state of a vehicle seat, e.g. for reminding an occupant to put on their seat belt and/or for determining deployment parameters for a secondary restraint system (i.e. an airbag). An occupancy sensor mat with sensor elements responsive to pressure is disclosed, for instance, in US application 2006/0150752.

Film-type occupancy sensor mats are typically placed underneath and close to an occupiable surface of the upholstery item, e.g. between a trim cover (visible from the outside, usually made of or comprising genuine or artificial leather, a textile, or the like) and a padding of the upholstery item. It is a known technique to place the sensor mat on the padding during the assembly of the upholstery item by use of attachment devices such as double-sided tape or Velcro. One drawback of such fixations is that, for instance, after production of a foam padding, the padding may be fully or partly covered with an oil film, used for facilitating the detaching of the foam body from the mould. The oil film may be chemically aggressive and/or act as an anti-adhesive, which leads to problems with traditional fixations: they may disengage, causing the sensor mat to move relative to the padding. Another problem encountered with common fixation methods is precise positioning of the sensor mat on the padding.

US patent 6,659,549 discloses a seat sensor including a pressure sensing mat, and several barbed members or tabs which are integrally formed within the sensing mat. The sensor is adapted to be operatively installed on a vehicle seat. In order to install the sensor, several holes or cavities are formed within the foam of the seat prior to assembly, and the tabs are forced into the cavities. Once the tabs are inserted into the cavities, barbed portions "spring" outward against the sides of the cavities, thereby frictionally engaging and/or piercing the sides of the cavities and securing the seat sensor to the seat.

While certain problems of traditional fixations appear to be resolved by the measures proposed in US 6,659,549, new problems arise. One drawback associated with this type of sensor mats is that the plastic material they are made of may lose flexibility and become brittle when ageing, whereby the "spring" properties of the barbed portion degrade. Moreover, when the tabs are engaged into the corresponding cavity, they are strongly deformed or compressed. Under the repeated loading and relief of the seat by occupants, causing additional bending and creasing of the tabs, the latter are likely to be damaged or even break.

The drawbacks of US 6,659,549 were overcome by the fixation disclosed in WO 2007/028819 which corresponds to the preamble of claim 1. This document proposes an assembly of a seat foam and a sensor mat, wherein the seat foam comprises at least one opening and the sensor mat comprises at least one anchor tab adapted to be inserted into the opening. In contrast to US 6,659,549, fixation is not provided through the barbed portion of the anchor tab springing back against the walls of the opening but through a retention element provided in the opening, against which the anchor tab abuts and which thereby prevents the anchor tab from slipping out of the opening.

Another problem is encountered where a film-type occupancy sensor mat interferes with a trim cover attachment assembly of an upholstery item. The trim cover of an upholstery item, which provides the outer surface thereof that may comes into contact with occupants, is normally secured to the padding by means of fastening elements such as e.g. hook elements, straps, clamps or the like. Examples of attachment assemblies can be found, for instance, in US 2005/0006944, US 6,817,675 and US 4,865,383. The areas of an upholstery item wherein the attachment assemblies are located may be visible or hidden to the occupant, the visible variant being the more common one because the can be used to advantageously contribute to the outer appearance of the upholstery item. Where the attachment areas are formed as seam lines or grooves (hereinafter referred to as "crimp channels"), integration of an occupancy sensor mat into the upholstery item is not always an easy task, in particular, if the sensor mat is designed with portions that have to cross such crimp channels. At crossings of a film-type sensor mat with a crimp channel, deformation of the padding (e.g. as a consequence of pressure exerted by an occupant) may cause local buckling of the sensor mat. Over time, repeated buckling of the sensor mat may deteriorate carrier films, conductive traces and electric components of the sensor mat. A portion of a sensor mat that is likely to cross crimp channels is the so-called "connection tail", which bears those conductive traces configured for connecting the sensor mat to an electronic control unit. To mitigate the buckling problem at crimp channel crossings different solutions have already been presented, see e.g. for reference the international application PCT/EP2008/056546.

### Technical problem

It is an object of the present invention to provide an alternative solution to the problem of reducing deterioration of the tail of a film-type occupancy sensor mat. This object is achieved by an upholstery item as claimed in claim 1.

### General Description of the Invention

An upholstery item with an occupiable surface for supporting an occupant comprises a padding (e.g. a foam body, a 3D spacer fabric and/or a combination of these) having a front side turned towards the occupiable surface, a back side turned away from the occupiable surface and an opening extending through the padding from the front side to the back side. A film-type occupancy sensor mat (such as e.g. a pressure-sensing mat, a film-type capacitive proximity sensor, or the like) arranged on the front side of the padding is equipped with an anchor tab comprising a proximal portion integrally formed with the sensor mat and a distal portion. It shall be noted that, in the context of the present, the terms "proximal" and "distal" are used relative to one another, i.e. the distal portion is arranged further away from the main portion of the sensor mat than the proximal portion. The anchor tab is inserted into the opening and secured against slipping out of the opening in direction of the front side by a retention element of the padding, provided at the opening. According to the invention, the anchor tab is configured as a connection tail, i.e. an electric-connection portion of the sensor mat adapted for connecting the sensor mat to an electronic control unit. Those skilled will appreciate that an electronic control unit for driving the sensor mat can now be connected to the sensor mat through the padding. Thus, it is no longer necessary to route the tail on the front surface of the padding over relatively long distances. This effectively reduces the risk that the tail has to cross crimp channels on its course. Consequently, it may be possible to use a given sensor mat layout for different designs of the upholstery item, which of course contributes to cost reduction. An interesting advantage of the present invention is also that the tail length may be reduced in comparison to previous solutions.

According to a preferred aspect of the invention, the proximal portion of the anchor tab comprises one or more lateral protrusions cooperating with the retention element for securing the anchor tab.

Preferably, the distal portion of the anchor tab comprises a cable fixed to the proximal portion, e.g. by an insulating plastic block (made e.g. epoxy, a thermoplastic, hotmelt, or a thermosetting resin). Additionally or alternatively to the above-mentioned lateral protrusions, securing the anchor tab may be achieved by the plastic block being dimensioned such that it cooperates with the retention element of the padding.

The retention element preferably comprises an edge about the opening and/or a narrowing of the opening.

According to a preferred aspect of the invention, the padding has a further opening extending therein from the front side and the sensor mat comprises a further anchor tab inserted into the further opening and secured against slipping out of the further opening in direction of the front side by a retention element provided in the padding at the further opening. The further anchor tab may be integrally formed with the sensor mat. Preferably, the anchor tab and the further anchor tab are arranged diametrically opposed to one another with respect to the sensor mat. In contrast to the opening which accommodates the anchor tab configured as the tail of the sensor mat, the further opening need not (but could) be a through hole but can also be configured as a blind hole.

A currently most preferred aspect of the present invention concerns a vehicle seat comprising a seating portion and a backrest portion, at least one of which comprises or consists of an upholstery item as described hereinabove.

### Brief Description of the Drawings

Further details and advantages of the present invention will be apparent from the following detailed description of a not limiting embodiment with reference to the attached drawings, wherein:
Fig. 1 is a longitudinal cross sectional view through a vehicle seat equipped with a film-type occupancy sensor mat;
Fig. 2 is a perspective view of a cut through a foam body for a vehicle seat with an occupancy sensor mat affixed to the foam body;
Fig. 3 is an enlarged view of a detail of Fig. 2;
Fig. 4 is a top view of the occupancy sensor mat shown in Figs. 2 and 3.

### Description of Preferred Embodiments

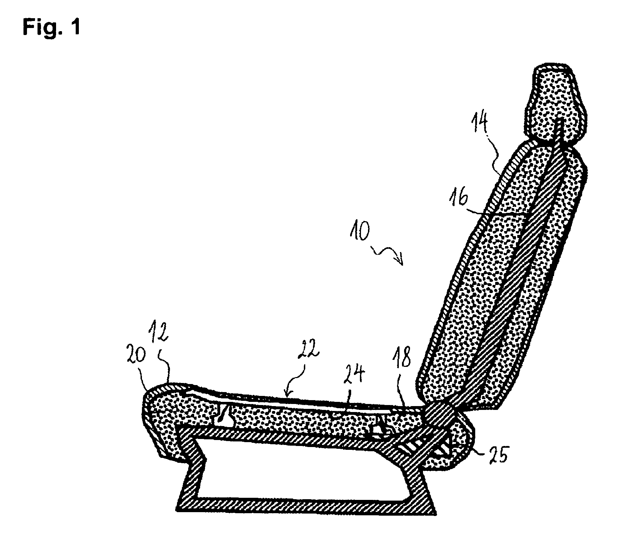

Fig. 1 shows an automobile seat 10 comprising a seating portion 12 and a seat back 14 mounted on a seat frame 16. The seating portion 12 is configured as an upholstery item according to the present invention. The seating portion 12 includes a padding (in this example the foam body 18) and a trim cover 20, the upper surface of which defines the occupiable surface 22 of the seating portion 12, attached to the foam body 18. The seating portion 12 further comprises an occupancy sensor mat 24 arranged between the trim cover 20 and the foam body 18.

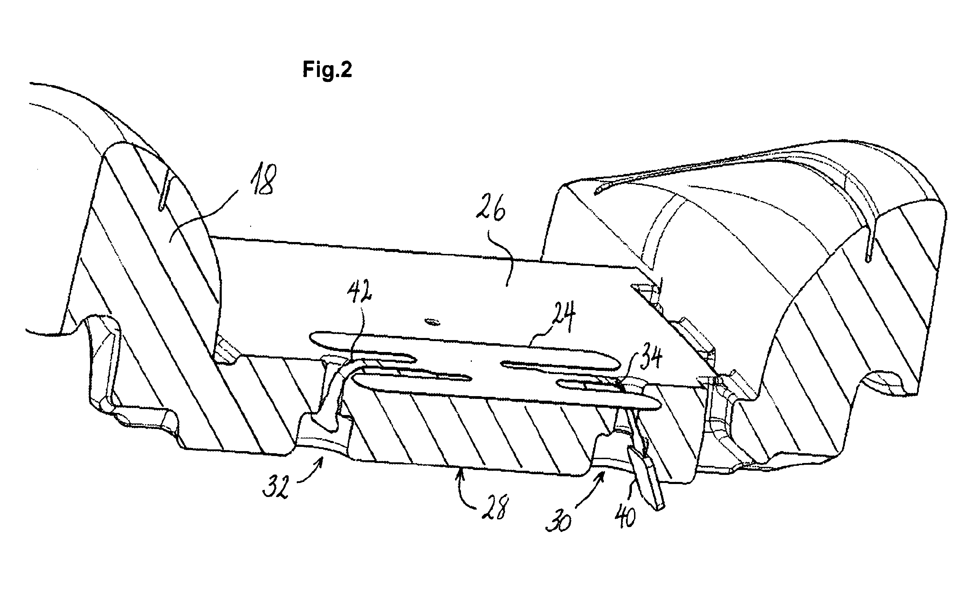

Fig. 2 shows a foam body 18 (made e.g. of polyurethane foam) for the seating portion 12 and an occupancy sensor mat 24 attached to the foam body 18. The foam body 18 has a front side 26 (the upper side when the seating portion 12 is mounted in conventional manner in a vehicle) and a back side 28 (the lower side when the seat portion is mounted in conventional manner). The front side 26 is turned towards the occupiable surface (not shown in Figs. 2-4) of the seating portion 12. The foam body 18 has two openings 30, 32 extending therein from the front side 26 to the back side 28 and arranged at certain distance apart from one another in the middle region of the foam body 18. The film-type occupancy sensor mat 24 is arranged on the front side 26 of the foam body 18.

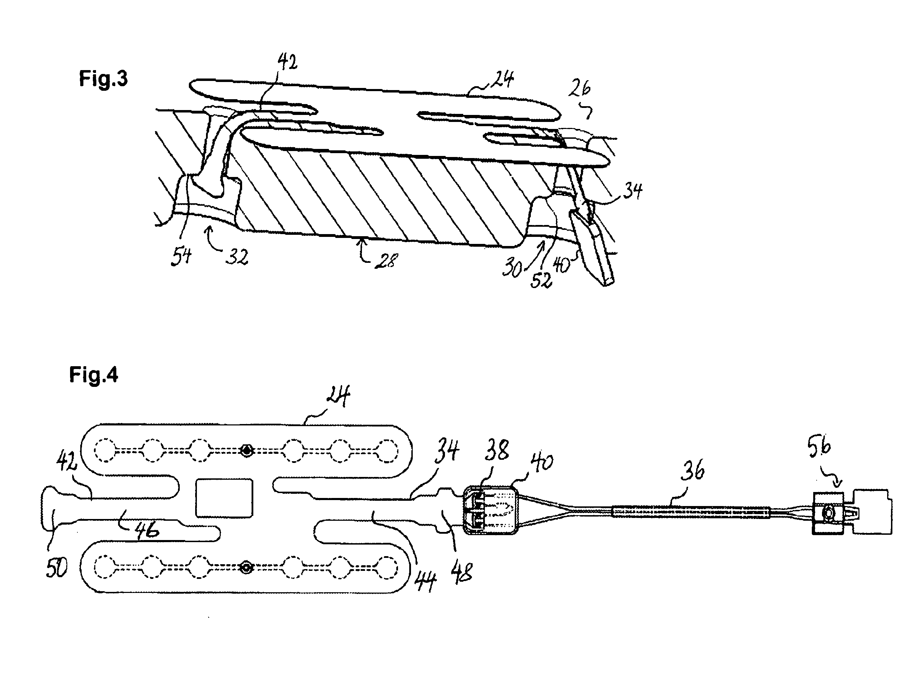

Details of the sensor mat 24 are best shown in Figs. 3 and 4. The sensor mat 24 comprises sensor elements (schematically illustrated by the dashed contours) that are responsive to seat occupancy. The sensor elements are electrically connectable to an electronic control unit (illustrated e.g. at reference numeral 25 in Fig. 1) of the sensor mat via conductive traces (not shown) printed on the sensor mat 24 and a first anchor tab 34 configured as a connection tail of the sensor mat 24. In this embodiment, the connection tail 34 comprises a proximal portion integrally formed with the sensor mat 24 and a distal portion in form of a cable 36 connected with the proximal portion through a crimp connection 38 protected by an insulating plastic block 40.

The sensor mat comprises a second anchor tab 42, which is arranged diametrically opposite the first anchor tab 34. Each anchor tab 34, 42 comprises an elongated stem portion 44, 46 and a head portion 48, 50 having an increased width with respect to the stem portion. The first and second anchor tabs 34, 42 are inserted in one of the openings 30 and 32, respectively. The head portions of their proximal portions cooperate with a retention edge 52, 54 about the respective opening in such a way that the anchor tabs 34, 42 are secured against slipping out of the opening in direction of the front side of the foam body 18. It should be noted that the insulating plastic block 40, which protects the electrical connection between the conductive traces and the cable 36 is dimensioned in such a way that it would also abut against the retention edge 52 in case the head portion 48 should be drawn into the narrowed part of the opening 30, e.g. following exceptionally high tensile force. In another variant of the invention, the first anchor tab 34 comprises only the insulating plastic block as an element cooperating with the corresponding retention element of the foam.

An upholstery item according to the present invention is preferably manufactured as follows. The foam body 18 is formed in a mould in a conventional foaming process and cured. The sensor mat 24 is then affixed to the foam body by introducing the first anchor tab 34 (the connection tail) into the corresponding opening 30 from the front side 26 of the foam body 18. The sizes of the connector 56, the insulating plastic block 40 and the opening 30 are adjusted to the resiliency of the foam body 18 in such a way that the first anchor tab 34 can be inserted into the opening 30 without damaging the foam surrounding it. The second anchor tab 42 is introduced into the other opening 32 in similar manner. Only when the sensor mat 24 has been secured to the foam body is the trim cover 20 applied to it. In contrast to opening 30, opening 32 may also be a blind hole.

## Claims

**1.** An upholstery item (12), having an occupiable surface for supporting an occupant of said upholstery item (12) and comprising
a padding (18) having a front side (26) turned towards said occupiable surface, a back side (28) turned away from said occupiable surface and an opening (30) extending therein from said front side (26) to said back side (28),
and a film-type occupancy sensor mat (24) disposed on said front side (26) of said padding (18), said sensor mat (24) having an anchor tab (34), said anchor tab comprising a proximal portion (44) integrally formed with said sensor mat (24) and a distal portion (36, 38, 40), said anchor tab (34) being inserted into said opening (30), and wherein said padding (18) comprises a retention element (52) at said opening (30) which secures said anchor tab (34) against slipping out of said opening (30) in direction of said front side (26);
**characterized in that** said anchor tab (34) is configured as an electric-connection portion of said sensor mat (24), for connecting said sensor mat (24) to an electronic control unit.

**2.** The upholstery item (12) according to claim 1, wherein the proximal portion (44) of said anchor tab (34) comprises one or more lateral protrusions cooperating with said retention element (52) for securing said anchor tab (34).

**3.** The upholstery item (12) according to claim 1 or 2, wherein the distal portion (36, 38, 40) of said anchor tab (34) comprises a cable (36) fixed to said proximal portion.

**4.** The upholstery item (12) according to any one of claims 1 to 3, comprising an insulating plastic block (40) fixing said cable (36) to said proximal portion.

**5.** The ulholstery item (12) according to claim 4, wherein said plastic block (40) is dimensioned such that said plastic block (40) cooperates with said retention element (52) for securing said anchor tab (34).

**6.** The upholstery item (12) according to claim 4 or 5, wherein said plastic block (40) is made of epoxy, a thermoplastic or a thermosetting resin.

**7.** The upholstery item (12) according to any one of claims 1 to 6, wherein said retention element comprises at least one of an edge (52) about said opening (30) and a narrowing of said opening.

**8.** The upholstery item (12) according to any one of claims 1 to 7, wherein said padding comprises a foam body (18).

**9.** The upholstery item (12) according to any one of claims 1 to 8, wherein said padding (18) has a further opening (32) extending therein from said front side (26), said sensor mat (24) comprising a further anchor tab (42) inserted into said further opening, said padding (18) comprising a retention element (54) at said further opening (32), which secures said further anchor tab (42) against slipping out of said further opening (32) in direction of said front side (26).

**10.** The upholstery item (12) as claimed in claim 9, wherein said further anchor tab (42) is integrally formed with said sensor mat (24).

**11.** The upholstery item (12) as claimed in claim 9 or 10, wherein said anchor tab (34) and said further anchor tab (42) are diametrically opposed to one another with respect to said sensor mat (24).

**12.** The upholstery item (12) as claimed in any one of claims 9 to 11, wherein said further opening (32) is a blind hole.

**13.** The upholstery item (12) as claimed in any one of claims 1 to 12, wherein said film-type occupancy sensor mat (24) is a pressure-sensing mat.

**14.** The upholstery item (12) as claimed in any one of claims 1 to 12, wherein said film-type occupancy sensor mat (24) is a film-type capacitive proximity sensor.

**15.** A vehicle seat (19) comprising a seating portion (12) and a backrest portion (14), wherein at least one of said seating portion (12) and said backrest portion (14) comprises the upholstery item according to any one of claims 1 to 14.

## Patentansprüche

1. Polstergegenstand (12), aufweisend eine belegbare Oberfläche zum Tragen eines Benutzers des Polstergegenstands (12) und umfassend
eine Polsterung (18) mit einer der belegbaren Oberfläche zugewandten Vorderseite (26), einer von der belegbaren Oberfläche abgewandten Rückseite (28) und einer sich darin von der Vorderseite (26) zur Rückseite (28) erstreckenden Öffnung (30),
und eine auf der Vorderseite (26) der Polsterung (18) angeordnete Belegungssensormatte (24) folienartige, wobei die Sensormatte (24) eine Ankerlasche (34) aufweist, wobei die Ankerlasche einen einstückig mit der Sensormatte (24) ausgebildeten nahen Abschnitt (44) und einen fernen Abschnitt (36, 38, 40) umfasst, wobei die Ankerlasche (34) in die Öffnung (30) eingebracht ist und wobei die Polsterung (18) ein Halteelement (52) an der Öffnung (30) umfasst, welches die Ankerlasche (34) gegen Herausgleiten aus der Öffnung (30) in Richtung der Vorderseite (26) sichert;
**dadurch gekennzeichnet, dass** die Ankerlasche (34) als elektrischer Verbindungsabschnitt der Sensormatte (24) konfiguriert ist, um die Sensormatte (24) an ein elektronisches Steuergerät anzuschließen.

2. Polstergegenstand (12) nach Anspruch 1, wobei der nahe Abschnitt (44) der Ankerlasche (34) einen oder mehrere seitliche Vorsprünge umfasst, die mit dem Halteelement (52) zusammenwirken, um die Ankerlasche (34) zu sichern.

3. Polstergegenstand (12) nach Anspruch 1 oder 2, wobei der ferne Abschnitt (36, 38, 40) der Ankerlasche (34) ein an dem nahen Abschnitt befestigtes Kabel (36) umfasst.

4. Polstergegenstand (12) nach irgendeinem der Ansprüche 1 bis 3, umfassend einen isolierenden Kunststoffblock (40), der das Kabel (36) an dem nahen Abschnitt befestigt.

5. Polstergegenstand (12) nach Anspruch 4, wobei der Kunststoffblock (40) derart dimensioniert ist, dass er mit dem Halteelement (52) zusammenwirkt, um die Ankerlasche (34) zu sichern.

6. Polstergegenstand (12) nach Anspruch 4 oder 5, wobei der Kunststoffblock (40) aus Epoxidharz, einem thermoplastischen oder einem duroplastischen Harz besteht.

7. Polstergegenstand (12) nach irgendeinem der Ansprüche 1 bis 6, wobei das Halteelement mindestens eine von einer Kante (52) rings um die Öffnung (30) und einer Verengung der Öffnung umfasst.

8. Polstergegenstand (12) nach irgendeinem der Ansprüche 1 bis 7, wobei die Polsterung einen Schaumkörper (18) umfasst.

9. Polstergegenstand (12) nach irgendeinem der Ansprüche 1 bis 8, wobei die Polsterung (18) eine sich darin von der Vorderseite (26) aus erstreckende weitere Öffnung (32) aufweist, wobei die Sensormatte (24) eine in die weitere Öffnung eingebrachte weitere Ankerlasche (42) umfasst, wobei die Polsterung (18) ein Halteelement (54) an der weiteren Öffnung (32) umfasst, welches die weitere Ankerlasche (42) gegen Herausgleiten aus der weiteren Öffnung (32) in Richtung der Vorderseite (26) sichert.

10. Polstergegenstand (12) nach Anspruch 9, wobei die weitere Ankerlasche (42) einstückig mit der Sensormatte (24) ausgebildet ist.

11. Polstergegenstand (12) nach Anspruch 9 oder 10, wobei die Ankerlasche (34) und die weitere Ankerlasche (42) in Bezug auf die Sensormatte (24) einander diametral gegenüberliegen.

12. Polstergegenstand (12) nach irgendeinem der Ansprüche 9 bis 11, wobei die weitere Öffnung (32) ein Sackloch ist.

13. Polstergegenstand (12) nach irgendeinem der Ansprüche 1 bis 12, wobei die folienartige Belegungssensormatte (24) eine Druckerfassungsmatte ist.

14. Polstergegenstand (12) nach irgendeinem der Ansprüche 1 bis 12, wobei die folienartige Belegungssensormatte (24) ein kapazitiver folienartiger Näherungssensor.

15. Fahrzeugsitz (19) umfassend einen Sitzabschnitt (12) und einen Rückenlehnenabschnitt (14), wobei mindestens einer von dem Sitzabschnitt (12) und dem Rückenlehnenabschnitt (14) den Polstergegenstand nach irgendeinem der Ansprüche 1 bis 14 umfasst.

## Revendications

1. Élément de garnissage (12), ayant une surface occupable pour supporter un occupant dudit élément de garnissage (12) et comprenant
un capitonnage (18) ayant un côté avant (26) tourné vers ladite surface occupable, un côté arrière (28) tourné à l'opposé de ladite surface occupable et une ouverture (30) s'étendant dans celui-ci dudit côté avant (26) jusqu'audit côté arrière (28),
et un tapis détecteur (24) d'occupation de type film disposé sur ledit côté avant (26) dudit capitonnage (18), ledit tapis détecteur (24) ayant une languette d'ancrage (34), ladite languette d'ancrage comprenant une partie proximale (44) formée de façon intégrale avec ledit tapis détecteur (24) et une partie distale (36, 38, 40), ladite languette d'ancrage (34) étant insérée à l'intérieur de ladite ouverture (30), et dans lequel ledit capitonnage (18) comprend un élément de rétention (52) au niveau de ladite ouverture (30) qui arrête ladite languette d'ancrage (34) contre un glissement hors de ladite ouverture (30) en direction dudit côté avant (26) ;
**caractérisé en ce que** ladite languette d'ancrage (34) est configurée comme une partie de connexion électrique dudit tapis détecteur (24), pour connecter ledit tapis détecteur (24) à une unité de contrôle électronique.

2. Élément de garnissage (12) selon la revendication 1, dans lequel la partie proximale (44) de ladite languette d'ancrage (34) comprend une ou plusieurs saillie(s) latérale(s) coopérant avec ledit élément de rétention (52) pour arrêter ladite languette d'ancrage (34).

3. Élément de garnissage (12) selon la revendication 1 ou 2, dans lequel la partie distale (36, 38, 40) de ladite languette d'ancrage (34) comprend un câble (36) fixé à ladite partie proximale.

4. Élément de garnissage (12) selon l'une quelconque des revendications 1 à 3, comprenant un bloc plastique (40) d'isolation fixant ledit câble (36) à ladite partie proximale.

5. Élément de garnissage (12) selon la revendication 4, dans lequel ledit bloc plastique (40) est dimensionné de telle manière que ledit bloc plastique (40) coopère avec ledit élément de rétention (52) pour arrêter ladite languette d'ancrage (34).

6. Élément de garnissage (12) selon la revendication 4 ou 5, dans lequel ledit bloc plastique (40) est constitué d'époxy, d'une résine thermoplastique ou thermodurcissable.

7. Élément de garnissage (12) selon l'une quelconque des revendications 1 à 6, dans lequel ledit élément de rétention comprend au moins un parmi un bord (52) autour de ladite ouverture (30) et un rétrécissement de ladite ouverture.

8. Élément de garnissage (12) selon l'une quelconque des revendications 1 à 7, dans lequel ledit capitonnage comprend un corps en mousse (18).

9. Élément de garnissage (12) selon l'une quelconque des revendications 1 à 8, dans lequel ledit capitonnage (18) a une autre ouverture (32) s'étendant dans celui-ci à partir dudit côté avant (26), ledit tapis détecteur (24) comprenant une autre languette d'ancrage (42) insérée dans ladite autre ouverture, ledit capitonnage (18) comprenant un élément de rétention (54) au niveau de ladite autre ouverture (32), qui arrête ladite autre languette d'ancrage (42) contre un glissement hors de ladite autre ouverture (32) en direction dudit côté avant (26).

10. Élément de garnissage (12) selon la revendication 9, dans lequel ladite autre languette d'ancrage (42) est formée de façon intégrale avec ledit tapis détecteur (24).

11. Élément de garnissage (12) selon la revendication 9 ou 10, dans lequel ladite languette d'ancrage (34) et ladite autre languette d'ancrage (42) sont diamétralement opposées l'une à l'autre par rapport audit tapis détecteur (24).

12. Élément de garnissage (12) selon l'une quelconque des revendications 9 à 11, dans lequel ladite autre ouverture (32) est un trou borgne.

13. Élément de garnissage (12) selon l'une quelconque des revendications 1 à 12, dans lequel ledit tapis détecteur (24) d'occupation de type film est un tapis de détection de pression.

14. Élément de garnissage (12) selon l'une quelconque des revendications 1 à 12, dans lequel ledit tapis détecteur (24) d'occupation de type film est un détecteur de proximité capacitif de type film.

15. Siège de véhicule (19) comprenant une partie d'assise (12) et une partie de dossier (14), dans lequel au moins une parmi ladite partie d'assise (12) et ladite partie de dossier (14) comprend l'élément de garnissage selon l'une quelconque des revendications 1 à 14.
